# EUROPEAN PATENT APPLICATION

(11) **EP 3 842 880 A1**
(43) Date of publication of application: **30.06.2021**
(21) Application number: 19219582.4
(22) Date of filing: 24.12.2019
(51) Int. Cl.: G05B 19/404, B23Q 11/12

(54) **A DEVICE FOR THERMAL CONTROL OF MACHINE TOOL**

(71) Applicant: GF Machining Solutions AG, 2504 Biel/Bienne (CH)
(72) Inventor: KONVICKA, Jan, 2502 Biel (CH); BRATSCHI, Frank, 2555 Brügg (CH)
(74) Representative: Fenner, Seraina

(57) **Abstract**

The present invention is directed to a device for compensation of deformation of a machine element caused by a heating source located in a proximal distance to a first position on the machine element. The device comprises a heating circuit arranged on a second position of the machine element and is configured to heat the machine element at the second position such that the deformation generated by the heating source can be compensated.

## Description

### FIELD OF THE INVENTION

The invention is related to a device for compensation of deformation of a machine element caused by a heating source. In further, the present invention is directed to a machine tool including the device for compensation of the deformation of a machine element.

### BACKGROUND OF THE INVENTION

In the machine tool, the moveable elements normally are driven by a drive system to obtain a controlled movement. The axis carriages are one of such movable machine elements. In some applications, high-power driving system is required to enable the movement of the carriage having a high weight. The drive system is arranged on one side of the carriage, for example the driving system for the Z-axis carriage is arranged on the back side of the carriage. A spindle is provided on the carriage to clamp different tools used for machining a workpiece.Through the heat losses generated by the drive system at the back side of the Z-axis carriage, the temperature gradient between the front side and the back side of the carriage induces a deformation which tends to distort the structure and therefore, shift the tool center point of the tool leading to inaccurate machining results.

In order to improve the accuracy of the machining results, a well-known method is to correct the position of the moveable element of the machine tool.

EP 1789 860 discloses a method for compensating thermal shifts that occur in a machine tool. According to this method, a temperature value actually measured in one measuring point on the machine tool is used to calculate, following a calculation rule, at least one correction factor for the at least one axis. The calculation rule is adapted to the respective machining process. However, the correction factor is applied to correct the position of the axis.

### SUMMARY OF THE INENTION

It is an objective of this invention to provide a device for compensation of deformation of a machine element caused by a heating source, which has a simple construction.

In particular, it is an objective to provide a device applied to adaptively reduce the temperature gradient in a machine element.

According to the present invention, these objectives are achieved through the features of claim 1. In addition, further advantageous embodiments follow from the dependent claims and the description.

In the present invention, a device for compensation of deformation of a machine element caused by a heating source located in a proximal distance to a first position on the machine element. The device comprises a heating circuit, which is arranged on a second position of the machine element and is configured to heat the machine element at the second position such that the deformation generated by the heating source can be compensated.

One of such machine elements is Z-axis carriage, which is driven by a motor to realize the movement of the spindle provided thereon. For example, a motor having heat loss of about 500 W can cause a temperature increase of several Kelvin at the back side of the carriage. The temperature gradient between the back side and the front side, which is the opposite to the back side can produce a deformation of the carriage in the range of several µm. Such deformation has a negative impact on the machining precision, since the deformation of the carriage induces positioning errors resulting from the deviations of the tool center point. The temperature gradient between the front side and the back side of the Z carriage can be reduced by evacuating the heat generated the heat source and/or heating the front side with additional heating circuit.

However, the device is not limited to be applied to the Z-axis carriage but applicable to every axis carriage subjected to temperature gradient. Therefore, the machine element is one of the following: X-axis carriage, Y-axis carriage and Z-axis carriage. Furthermore, the machine element is a part of the machine tool, which is located closely to a heating source, for example the rotation axis carriage for the rotation in A, B and C.

In one preferred variant, the device is applied to the Z-axis carriage and the first position of the machine element is on the back side of the axis carriage, where the drive system is mounted and the second position of the machine element is on the front side of the carriage.

Depending on the application and the construction of the machine element, the heating circuit can be controlled in an active manner or in a passive manner, namely the heating circuit is an active heating circuit or a passive heating circuit.

In order to increase the flexibility of the device, it is considerable to arrange a plurality of heating circuits. The heating circuits can be fixed or removably provided at the different positions of one machine element. It is further considerable to provide a plurality of heating circuits on different machine elements.

It is advantageous to design the device such that the heating circuit is configured to receive the heat energy from the heating source, for example to reuse the heat loss of the drive of the carriage. This provides an energy-sufficient device and the reduction of the deformation can be automatically adapted. This is so-called passive heating circuit.

The passive heating circuit is used to prevent the need of a specific additional heating system. The warm coolant used to heat the front side of the Z- axis carriage is retrieved from the cooling circuit of the Z-axis drive. In this way, there is an automatic adjustment of the temperature of the coolant to compensate the thermal losses generated by the drive, which depend on the load of the motor.

The passive heating circuit is preferably directly embedded in the machine element. If the passive heating circuit is formed with the machine element in one part, the sufficiency of the assembling of the machine tool can be improved. A simple implementation of the heating circuit is to provide at least one fluid channel in the area of the second position of the machine element to receive a fluid from the heating source and/or from a fluid supply circuit.

Cooling channel is formed in one part with the carriage, it can be provided during the manufacturing of the machine element.

The fluid is coolant applied to the heating source for cooling, in particular the coolant is air, water, oil and PCM-based fluid.

The cooling channel is designed for maximal motor power required for one machine type. But it can be adjusted to different types of machine.

If the heating circuit is controlled in the active manner by an active heating circuit, a versatile device can be obtained, since the same device can be applied for different machine elements without redesigning the heating element. In such embodiments, the active heating circuit comprises at least one heating element and a thermal control unit, which is configured to receive thermal condition data of the first position of the machine element, to determine nominal thermal energy based on the received thermal condition data and to control the heating circuit arranged on the second position such that the nominal thermal energy is generated at the second position.

In order to achieve a low-cost device, the heating element is an electric heating element. The heating element is controlled by the thermal control unit to generated the nominal thermal energy at the second position.

A first temperature sensor is arranged at the first position and/or a second temperature sensor is arranged at the second position.

In a variant, the thermal condition data is derived from the first temperature sensor and/or directly from the heating source. If the heating source is a drive, the heat energy transferred from the drive to the machine element can be calculated based on the motor power.

During the machining of a machine tool, the power of the drive varies depending on the machining process, therefore, a real-time adjustment can increase the precision of the compensation of the deformation. Thus, the second temperature sensor measures the temperature of the second position and inputs it to the thermal controller such that the thermal controller can adjust the set thermal energy to be generated by the heating element based on the measured temperature.

In order to increase the precision of the compensation, the heating circuit is a combination of the passive heating circuit and the active heating circuit.

In a preferred variant, the at least one fluid channel and the at least one heating element are provided in the area of the second position, wherein the fluid channel is configured to receive a fluid, which is heated by the heating source. In the present invention, a machine tool for machining a workpiece, in particular, a milling machine tool, a laser machine tool, a grinding machine tool or EDM machine tool comprises a device for compensation of deformation of a machine element caused by a heating source.

### BRIEF DESCRIPTION OF THE DRAWINGS

In order to describe the manner in which advantages and features of the disclosure can be obtained, in the following a more particular description of the principles briefly described above will be rendered by reference to specific embodiments thereof which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:
- Fig. 1a and Fig. 1b: illustrate general concept of the present invention;
- Fig. 2: illustrates a simplified schematic of active heating circuit of the present invention; and
- Fig. 3: illustrates a simplified schematic of passive heating circuit of the present invention.

### EXEMPLARY EMBODIMENTS

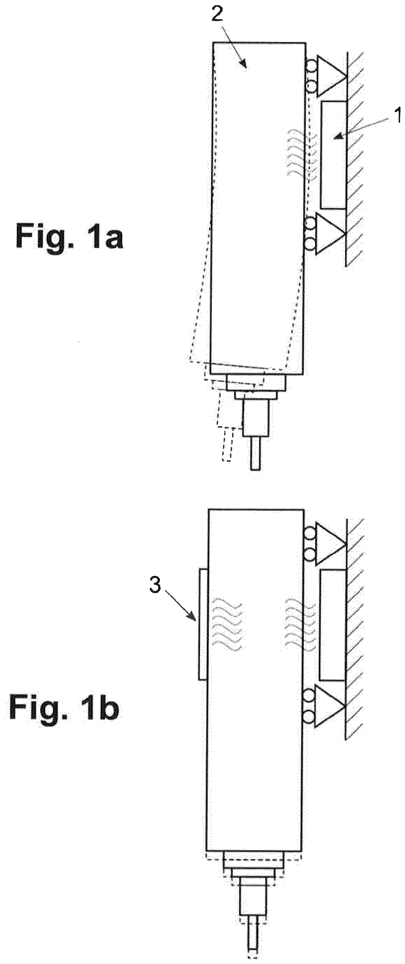

Figures 1a and 1b illustrate the working principle of the present invention. A heating source 1 is present in the proximity of a machine element 2, for example at the backside of the Z-axis carriage. The heat dissipated from the heating source to a first position 4 on the machine element causes a deformation of the machine element. For example, the machine element bends into the opposite direction away from the heating source. In order to compensate this deformation, a heating element 3 is provided to the machine element on a second position, for example at the front side of the Z-axis carriage. The heating element is controlled to heat the second position such that the field of temperature in the machine element is homogeneous, thereby the deformation caused by the inhomogeneous of the heat dissipation is overcome.

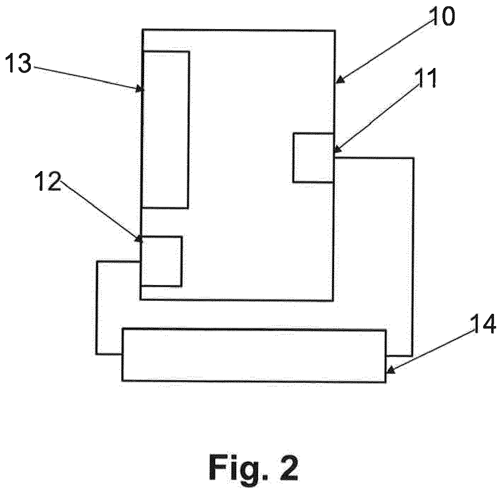

Figure 2 shows an example of the invention implemented in an axis carriage 10 of a machine tool. The drive system is located on a first surface of the carriage and the thermal energy generated by the drive system is transferred from the drive system into the machine element, since it is made of thermal conductive material. A first temperature sensor 11 is mounted on the first surface to measure the temperature thereof. An electrical heating element 13 is provided on a second surface, which is the opposite of the first surface to generate same amount heat energy, which is transferred from the drive system to the first surface. A second temperature sensor 12 is applied to the second surface to obtain the temperature thereof in real time. This temperature can be sent to a thermal control unit 14 to adjust thermal energy to be generated by the electrical heating element.

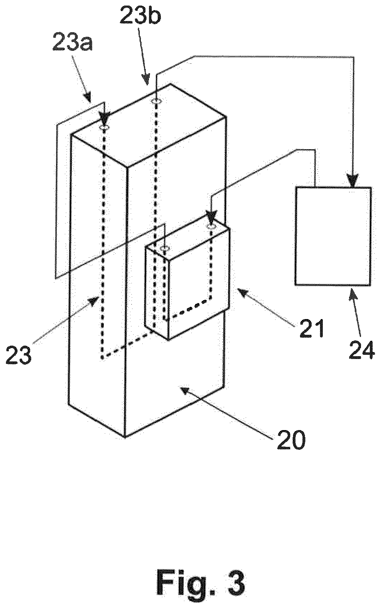

Figure 3 illustrates another embodiment of the invention by means of implementation in a Z-axis carriage 20. The drive 21 of the Z-axis carriage is mounted on the backside of the carriage. The coolant for cooling the drive is supplied by a cooling circuit 24. The drive warms up the coolant. On the front side of the carriage, a fluid channel 23 is embedded in the carriage and the warmed-up coolant can directly flow through the fluid channel. By this way, the same thermal energy transferred from the drive to the back side of the carriage can be generated on the front side of the carriage. Consequently, the deformation of the carriage can be compensated.

### LIST OF REFERENCES

- 1: heating source
- 2: machine element
- 3: heating element
- 10: axis carriage
- 11: first temperature sensor
- 12: second temperature sensor
- 13: heating element
- 14: thermal control unit
- 20: z-axis carriage
- 21: z-axis drive
- 23: fluid channel
- 23a: inlet
- 23b: outlet
- 24: cooling circuit

## Claims

1. A device for compensation of deformation of a machine element caused by a heating source located in a proximal distance to a first position on the machine element comprises a heating circuit arranged on a second position of the machine element and configured to heat the machine element at the second position such that the deformation generated by the heating source can be compensated.

2. The device according to one of claims 1, wherein the machine element is one of the following: X-axis carriage, Y-axis carriage, Z-axis carriage and the rotation-axis carriage.

3. The device according to claim 1 or 2, wherein the first position of the machine element is on a firstside of the axis carriage, in particular, the back side of the axis carriage where a drive system arranged, and the second position of the machine element is on the opposite of the first side, in particular, on the front side of the axis carriage.

4. The device according to one of claims 1 to 3, wherein the heating circuit is a passive heating circuit configured to reuse the heat energy generated by the heating source.

5. The device according to one of claims 1 to 4, wherein the passive heating circuit comprises at least one fluid channel provided in the area of the second position to receive a fluid, which is heated by the heating source..

6. The device according to claim 5, wherein the fluid is coolant applied to the heating source for cooling, in particular the coolant is air, water, oil and PCM-based fluid.

7. The device according to one of claims 1 to 3, wherein the heating circuit is an active heating circuit comprising a thermal control unit, which is configured to receive thermal condition data of the first position of the machine element, to determine nominal thermal energy based on the received thermal condition data and to control at least one heating element arranged on the second position such that the nominal thermal energy is generated at the second position.

8. The device according to claim 7, wherein the heating element is an electric heating element and controlled by the thermal control unit to generated the nominal thermal energy at the second position.

9. The device according to claim 7 or 8, wherein a first temperature sensor is arranged at the first position and/or a second temperature sensor is arranged at the second position.

10. The device according to claim 9, wherein the thermal condition data is derived from the first temperature sensor and/or directly from the heating source.

11. The device according to claims 9 or 10, wherein during the heating of the heating element, the second temperature measures the temperature of the second position and inputs it to the thermal controller such that the thermal controller can adjust the nominal thermal energy to be generated by the heating element based on the measured temperature.

12. The device according to one of previous claims, wherein the heating circuit is a combination of the passive heating circuit and the active heating circuit.

13. The device according to claim 12, wherein the at least one fluid channel and the at least one heating element are provided in the area of the second position, wherein the fluid channel is configured to receive a fluid, which is heated by the heating source.

14. Machine tool for machine a workpiece, in particular, a milling machine tool, a laser machine tool, a grinding machine tool or EDM machine tool comprises a device according to one of claims 1 to 13.
